# EUROPEAN PATENT APPLICATION

(11) **EP 1 143 449 A1**
(43) Date of publication of application: **10.10.2001**
(21) Application number: 99959714.9
(22) Date of filing: 09.12.1999
(51) Int. Cl.: G11B 27/036, H04N 5/782

(54) **VIDEO EDITING DEVICE AND VIDEO EDITING METHOD**

(30) Priority: 15.12.1998 JP 35557098
(71) Applicant: Matsushita Electric Industrial Co., Ltd., Kadoma-shi, Osaka 571-8501 (JP)
(72) Inventor: SAWADA, Koji, Neyagawa-shi Osaka 572-0806 (JP)
(74) Representative: Grünecker, Kinkeldey, Stockmair & Schwanhäusser Anwaltssozietät
(86) International application number: JP9906896
(87) International publication number: WO0036607

(57) **Abstract**

A video editing device adapted to issue a warning to a user when invalid underlying data undergoes insert editing. Underlying data reading means (101) reads underlying data from a recording medium and outputs it to inserting means (103) and data checking means (105). Insert data reading means (102) reads insert data from an external device and outputs it to inserting means (103) and data checking means (105). Before insertion is carried out, data checking means (105) checks the underlying data to determine whether the continuity of the data and a transfer rate of the signal or a format thereof are compatible. Warning indicating means (106) provides the user with a warning when the underlying data is incompatible.

## Description

### TECHNICAL FIELD

The present invention relates to a device and method for editing video information of a video information recording medium such as a magnetic tape, a magnetic disk, an optical disk or the like.

### BACKGROUND ART

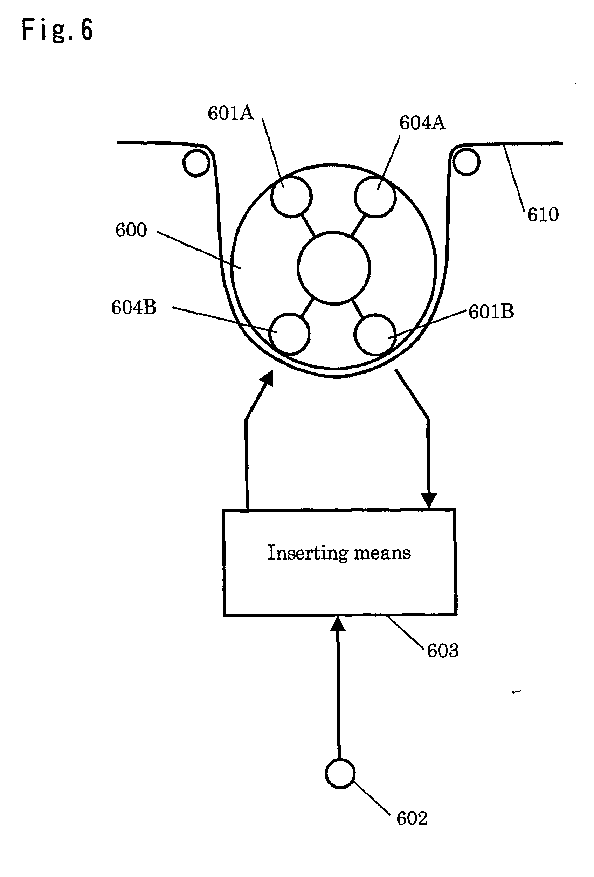

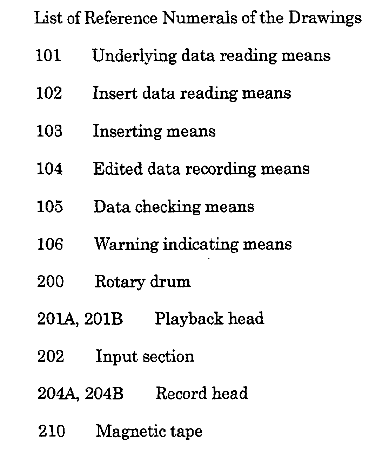

FIG. 6 is a system configuration of a conventional video editing device. In FIG. 6, rotary drum 600 scans magnetic tape (recording medium) 610 to read a video signal, which is already recorded on magnetic tape 610, via playback heads 601A, 601B. When a video signal to be inserted is input from an external device via input section 602 to inserting means 603, inserting means 603 detects each boundary between minimum units of the data, e.g. each boundary between frames, and outputs the video signal to be inserted to record heads 604A, 604B in the order in which the boundaries are detected.

This conventional video editing device has maintained its insertion without indicating any warning even when the data already recorded on magnetic tape 610 was invalid. In other words, this device has maintained its insertion without indicating any warning even when the underlying data was discontinuous or different in format from the data to be inserted. Such insertion does not provide results as intended at the time of editing when the magnetic tape is played back after editing, thus causing outputs of meaningless data. Presumable causes of the invalid underlying data include forced recording previously performed at some midpoint that causes a discontinuous point, the recording of data with another format at some midpoint and the others.

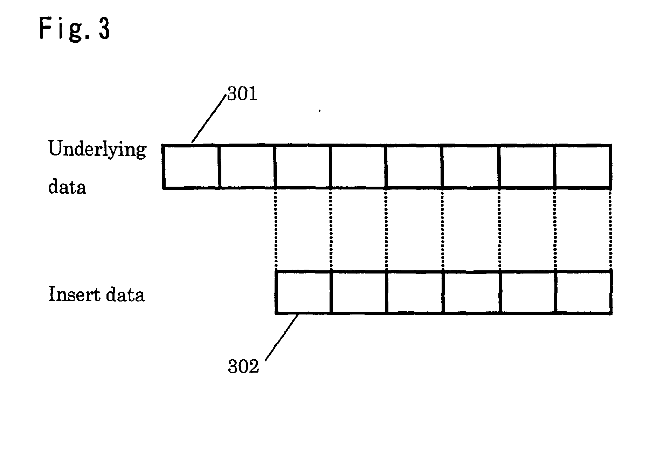

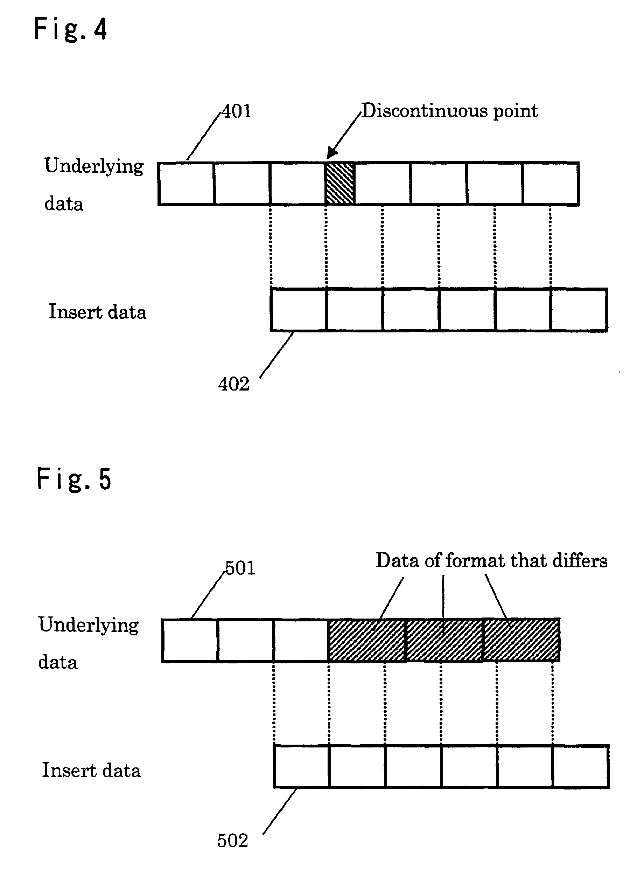

FIG. 3 illustrates a phase relationship between underlying data and insert data, showing a case where the underlying data is valid and undergoes insert editing. FIG. 4 illustrates a phase relationship between underlying data and insert data, showing a case where the underlying data has a discontinuous point caused by forced recording or the like and undergoes insert editing. FIG. 5 illustrates a phase relationship between underlying data and insert data, showing a case where the underlying data changes in format at some midpoint and undergoes insert editing. When the underlying data is valid, as shown in FIG. 3, underlying data 301 is in phase with video signal 302 from the external device, so that the respective boundaries of these data are in phase with to each other at all times. In this case, insert editing can normally be performed.

When the underlying data has the discontinuous point present at some midpoint, as shown in FIG. 4, underlying data 401 becomes out of phase with video signal 402 from the external device, so that insert-edited data becomes irregular. Similarly, when the data changes in format at some midpoint, as shown in FIG. 5, underlying data 501 becomes out of phase with video signal 502 from the external device. In this case, edited data visible to a user of the video editing device may look valid and has often been missed until it has developed into a major problem.

### DISCLOSURE OF THE INVENTION

The present invention addresses such conventional problems and aims to implement a video editing device and a video editing method capable of reducing trouble caused by an editing work by issuing a warning about meaningless editing of data in insert editing when invalid underlying data caused by user's unwitting operation or the like is present.

To resolve the above-mentioned problems, the video editing device of the present invention comprises: insert data reading means for externally reading data to be inserted; underlying data reading means for reading underlying data recorded on a recording medium; data checking means for checking whether the underlying data read by the underlying data reading means is validly continuous, and whether the underlying data has a signal format of the insert data read by the insert data reading means, by comparing the signal formats including data transfer rates between the insert data and the underlying data; warning indicating means for issuing a warning when a result of the check made by the data checking means indicates incompatibility; inserting means for inserting the data to be inserted into the underlying data; and edited data recording means for insert recording data output from the inserting means on the recording medium.

The video editing method of the present invention comprises the steps of: externally reading data to be inserted; reading underlying data recorded on a recording medium; checking whether the underlying data read by the underlying data reading step is validly continuous, and whether the underlying data has a signal format of the insert data read by the insert data reading step, by comparing the signal formats including data transfer rates between the insert data and the underlying data; issuing a warning when a result of the check obtained in the data checking step indicates incompatibility; inserting the data to be inserted into the underlying data; and insert recording data obtained in the inserting step on the recording medium.

### BRIEF DESCRIPTION OF THE DRAWINGS

FIG. 1 is a block diagram illustrating a basic configuration of a video editing device in accordance with one exemplary embodiment of the present invention.
FIG. 2 is a block diagram illustrating a system configuration of the video editing device, showing a case where a magnetic tape recorder/playback device is used as a recorder/playback system.
FIG. 3 illustrates a phase relationship between underlying data and insert data, showing a case where the underlying data is valid and undergoes insert editing.
FIG. 4 illustrates a phase relationship between underlying data and insert data, showing a case where the underlying data is discontinuous and undergoes insert editing.
FIG. 5 illustrates a phase relationship between underlying data and insert data, showing a case where the underlying data changes in format at some midpoint and undergoes insert editing.
FIG. 6 is a block diagram illustrating a system configuration of a conventional video editing device.

### BEST MODE FOR CARRYING OUT THE INVENTION

### (Exemplary Embodiment 1)

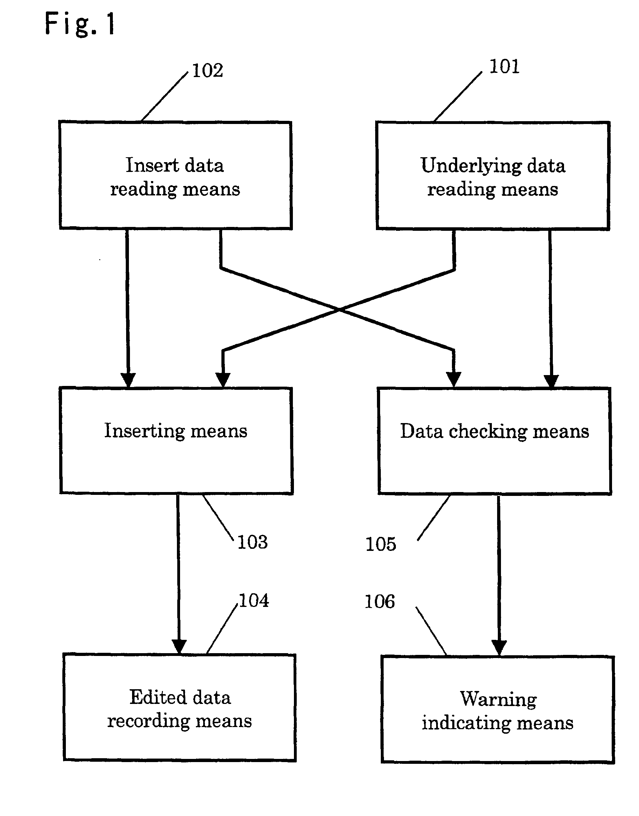

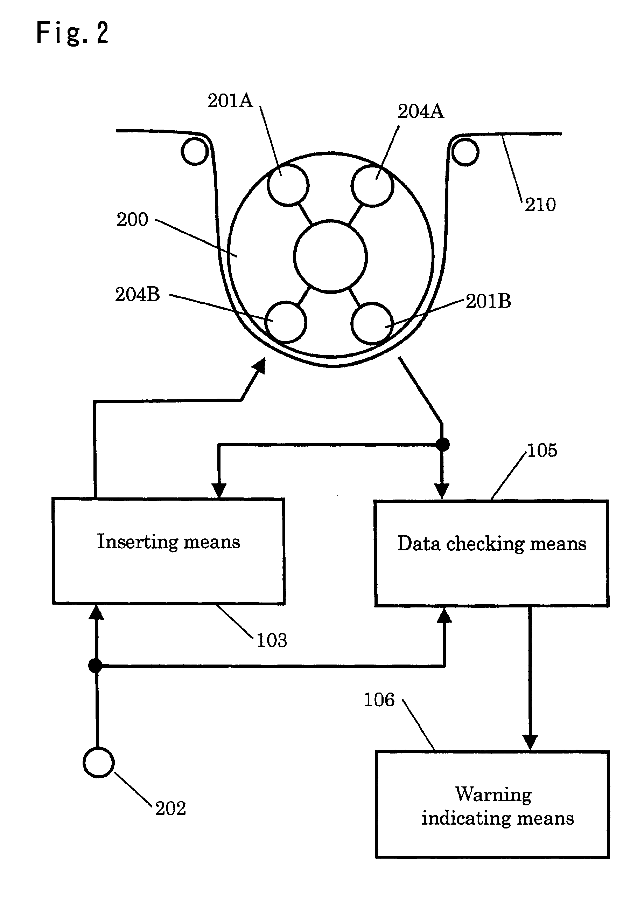

A video editing device in accordance with the first exemplary embodiment of the present invention is demonstrated with reference to FIGS. 1 and 2. FIG. 1 is a block diagram of the video editing device in accordance with the present embodiment, laying particular emphasis on a signal processing system thereof.

In FIG. 1, underlying data reading means 101 reads underlying data, on which insertion is performed, from a recording medium. Insert data reading means 102 reads data to be inserted from an external device. Inserting means 103 inserts the data read from insert data reading means 102 into the underlying data read from the underlying data reading means 101. Before inserting means 103 performs insert editing, data checking means 105 checks validities of the underlying data read from underlying data reading means 101, i.e., continuity of the underlying data, compatibility of the underlying data with the data read from insert data reading means 102 and the others. Warning indicating means 106 gives a warning to a user when the underlying data is judged as being invalid (incompatible) by data checking means 105. Edited data recording means 104 records data insert-edited by inserting means 103 on the recording medium.

FIG. 2 is a system block diagram of the video editing device in accordance with the present embodiment in which a magnetic tape recorder/playback device is used as an example of a recorder/playback system. In FIG. 2, the video editing device in accordance with the present embodiment includes, similarly to the conventional device shown in FIG. 6, rotary drum 200, input section 202 and inserting means 103. In the present embodiment, data checking means 105 is provided between input section 202 and inserting means 103. When a result of a comparison made by data checking means 105 indicates incompatibility, warning indicating means 106 provided indicates the incompatibility.

Playback heads 201A, 201B correspond to underlying data reading means 101 of FIG. 1, and input section 202 corresponds to insert data reading means 102 of FIG. 1.

With reference to FIG. 2, an explanation of operation performed by inserting a video signal input from input section 202 into a video signal already recorded on magnetic tape 210 in given format is given next. Rotary drum 200 scans magnetic tape 210 to read the video signal via playback heads 201A, 201B and supplies inserting means 103 and data checking means 105 with the video signal. When the video signal to be inserted is input from an external device via input section 202 to inserting means 103, inserting means 103 detects each boundary between minimum units of the data and outputs the video signal to be inserted to record heads 204A, 204B in the order in which the boundaries are detected. Record heads 204A, 204B record the video signal input on magnetic tape 210.

Here, data checking means 105 checks whether the underlying data is valid before insert editing is actually carried out. When the underlying data is invalid, warning indicating means 106 notifies the user of the incompatibility of the underlying data through display or the use of an audible warning.

As described above, when insert editing is performed on the invalid underlying data, the user is warned that the meaningless edited data is made, so that the reduction of confusion caused by an editing work can be improved.

The video editing device in accordance with the present embodiment has utilized the magnetic tape recorder/playback device. However, an optical disk recorder/playback device, a magneto-optical disk recorder/playback device, a magnetic disk recorder/playback device, a semiconductor recorder/playback device or the like can be used instead.

### INDUSTRIAL APPLICABILITY

According to the video editing device and the video editing method of the present invention, compatibilities of underlying data are checked before insertion is carried out, so that a warning can be given to a user when the underlying data is incompatible. Consequently, meaningless insert editing of video data can be prevented from being carried out.

## Claims

1. A video editing device comprising:
insert data reading means for externally reading data to be inserted;
underlying data reading means for reading underlying data recorded on a recording medium;
data checking means for checking whether the underlying data read by the underlying data reading means is validly continuous, and whether the underlying data has a signal format of the insert data read by the insert data reading means, by comparing the signal formats including data transfer rates between the insert data and the underlying data;
warning indicating means for issuing a warning when a result of the check made by the data checking means indicates incompatibility;
inserting means for inserting the data to be inserted into the underlying data; and
edited data recording means for insert recording data output from the inserting means on the recording medium.

2. A video editing method comprising the steps of:
externally reading data to be inserted;
reading underlying data recorded on a recording medium;
checking whether the underlying data read by the underlying data reading step is validly continuous, and whether the underlying data has a signal format of the insert data read by the insert data reading step, by comparing the signal formats including data transfer rates between the insert data and the underlying data;
issuing a warning when a result of the check obtained in the data checking step indicates incompatibility;
inserting the data to be inserted into the underlying data; and
insert recording data obtained in the inserting step on the recording medium.
